(19) Europäisches Patentamt

European Patent Office

Office européen des brevets

(11) **EP 0 879 535 B1**

(12) **EUROPÄISCHE PATENTSCHRIFT**

(45) Veröffentlichungstag und Bekanntmachung des Hinweises auf die Patenterteilung:
**06.09.2000 Patentblatt 2000/36**

(21) Anmeldenummer: **96917349.1**

(22) Anmeldetag: **14.06.1996**

(51) Int Cl.$^7$: **H04N 7/167**, H04N 1/44

(86) Internationale Anmeldenummer:
**PCT/DE96/01057**

(87) Internationale Veröffentlichungsnummer:
**WO 97/00578 (03.01.1997 Gazette 1997/02)**

(54) **VERFAHREN ZUR MARKIERUNG BINÄR CODIERTER DATENSÄTZE**

METHOD OF MARKING BINARY-CODED DATA SETS

PROCEDE DE MARQUAGE D'ENSEMBLES DE DONNEES A CODAGE BINAIRE

(84) Benannte Vertragsstaaten:
**AT BE CH DE DK ES FI FR GB GR IE IT LI LU NL PT SE**

(30) Priorität: **16.06.1995 DE 19521969**

(43) Veröffentlichungstag der Anmeldung:
**25.11.1998 Patentblatt 1998/48**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **KOCH, Eckhard**
 **D-64625 Bensheim (DE)**

• **ZHAO, Jian**
 **D-64380 Rossdorf (DE)**

(74) Vertreter: **Rösler, Uwe, Dipl.-Phys.**
 **Rösler Patentanwaltskanzlei**
 **Landsberger Strasse 480a**
 **81241 München (DE)**

(56) Entgegenhaltungen:
**EP-A- 0 454 556        EP-A- 0 610 587**
**EP-A- 0 619 677        EP-A- 0 633 703**
**EP-A- 0 641 130        EP-A- 0 648 055**
**WO-A-94/07326          US-A- 4 776 013**

## Beschreibung

### Technisches Gebiet

Die Erfindung bezieht sich auf ein Verfahren zur Markierung binär codierter Datensätze, insbesondere von Bilddaten oder Audio-Signalen, durch Implementierung wenigstens einer Informationseinheit in einen Datensatz.

### Stand der Technik

Der Schutz der Urheberrechte und Verwertungsrechte ist eines der Hauptanliegen der Anbieter von elektronischen Informationen, Verlegern, Medienkonzernen und Verwertungsgesellschaften. Ein Hauptanliegen von Urhebern ist der Schutz vor unerlaubten Vervielfältigungen und Verbreitungen von urheberrechtlich geschützten multimedialen Werken. In vielen Fällen, wie beispielsweise in der Verbreitung elektronisch gespeicherter Daten, ist die unmittelbare Verhinderung der unrechtmäßigen Verbreitung nicht möglich, so daß Techniken entwickelt worden sind, die die Verfolgung und Aufspürung unautorisierter Vervielfältigungen ermöglichen sowie deren Rückverfolgung nachweisen.

Derartige, in den einzelnen elektronischen Datensätzen einzubringende Maßnahmen sehen den sogenannten steganographischen Ansatz vor, die eine Technik darstellt, die zusätzliche Informationen in Daten geheim einbettet, indem sie die originalen Daten modifiziert, ohne die Qualität und das Erscheinungsbild der Daten wesentlich zu beeinflussen. So sind verschiedene Methoden untersucht worden, originale digitale Daten leicht zu modifizieren, um dadurch zusätzliche Informationen zu speichern. Matsui & Tanaka haben eine Reihe von steganographischen Methoden zur Identifikation bei verschiedenen Typen von digitalen Bildern, Videos oder Faxsimile vorgestellt. Siehe hierzu insbesondere die Druckschrift von Mantusi and K. Tanaka, "Video-Steganography: How to secrety embed a signature in a picture", IMA Intellectual Property Project Proceedings, Vol. 1, No. 1, 1994.

Das zugrundeliegende Prinzip ihrer Methoden beruht darauf, die Information so einzubetten, daß diese nur eine weitere Ungenauigkeit, d.h. eine Erhöhung im Rauschpegel, der Ursprungsdaten zu sein scheinen.

Forscher bei AT & T haben Möglichkeiten der Einbettung von Informationen in Form von Störungen bei einer wichtigen anderen Klasse von Dokumenten, nämlich strukturierten Texten untersucht, indem sie den Abstand zwischen aufeinanderfolgenden Zeilen des Textes und den Abstand zwischen Wörtern veränderten. Hierzu verwiesen auf J. Brassil et al, "Electronic Marking and Identification Techniques to Discourage Document Copying", AT & T Bell Laboratories, Murray Hill, N.J., 1994.

Die existierenden steganographischen Techniken für digitale Bilder erfüllen bei weiten nicht die Anforderungen für den Schutz und Nachweis intellektueller Eigentumsrechte von multimedialen Werken und Informationen. Dies ist darin begründet, daß die Techniken keinen Schutz gegen absichtliche oder unabsichtliche Angriffe bieten, die durch die digitale Verarbeitung der Daten, d.h. insbesondere der Bilder, möglich sind. Die Löschung, Veränderung oder Unkenntlichmachung der eingebetteten Informationen kann bei den herkömmlichen Verfahren z.B. leicht durch verlustbehaftete Bildkompression, Tiefpaß-Filterung und/oder durch einfaches Wechseln des Daten- bzw. Bildformates verursacht werden. Derartige Verarbeitungsschritte werden sogar oft zwangsläufig auf dem Weg eines multimedialen Dokumentes vom Urheber zum Endabnehmer bzw. -benutzer durchlaufen, weshalb die herkömmlichen Verfahren keinen fundierten Identifikationsnachweis liefern können.

Aus der europäischen Druckschrift EP 0 581 317 geht ein Verfahren zur digitalen Kennzeichnung digital abgespeicherter Datensätze, beispielsweise digitale Bilddaten, hervor. Das in dieser Druckschrift beschriebene Verfahren dient der Integration von digitalen Signaturen, sogenannten Markierungen, in digitalen Bildern. Die digitalen Signaturen sollen der künftigen Identifikation der Bilder dienen. Dazu werden Pixel des Bildes, welche relative Maxima und Minima, d.h. Extrema, in den Pixelwerten bzw. Luminanzwerten aufweisen, ausfindig gemacht. Von den derart bestimmten Punkten bzw. Pixelwerten des Bildes werden Punkte zur Integration eines Identifikationscodes, die sogenannte Signatur, ausgewählt. Zur Integration jeweils eines Bits der Signatur an jeweils einen ausgewählten Punkt des Bildes werden der Pixelwert selbst und unmittelbar benachbarte Pixelwerte angepaßt, d.h. modifiziert. Diesem Verfahren haftet jedoch der Nachteil an, daß die ausgewählten Positionen, an denen die Signaturwerte integriert werden, sehr leicht bestimmbar und daher als bekannt anzusehen sind. Durch die Wahl der Positionen an ursprünglich vorhandenen Extremwerten können die auf diese Weise durchgeführten integrierten Identifikationscodes leicht erkannt und entsprechend attackiert werden.

Ebenso geht aus einer europäischen Druckschrift, EP 0 614 308 A1 ein Verfahren zur Verschlüsselung von Daten hervor. Derartige Verschlüsselungsverfahren dienen jedoch der vollständigen Unkenntlichmachung eines gesamten Datensatzes für unautorisierten Zugriff. Hierbei werden hochauflösende Bildkomponenten mit Hilfe eines Schlüssels bzw. einer Verschlüsselungstechnik vor unberechtigtem Zugriff geschützt. Nicht-hochauflösende Bildkomponenten können jedoch frei zugänglich bleiben, so daß auf diese Weise ein hierarchischer Zugriff auf die Informationen möglich ist. Sämtliche Bildinformationen können hierbei in einem Speichermedium vorliegen, wobei nur berechtigte Benutzer mittels des Ihnen zur Verfügung gestellten Schlüssels auf die volle Bildinformation Zugriff haben. Das in der vorzitierten europäischen Druckschrift beschriebene Verfahren dient jedoch nicht einer gezielten Markierung von beispielsweise Bildinformationen für eine künftige Identifikation, sondern vielmehr der Verschlüsselung des gesamten Informationsinhaltes eines Bildes, so daß ein Nichtberechtigter auf diese Informationen ohne Zugriff bleibt.

## Darstellung der Erfindung

Der Erfindung liegt daher die Aufgabe zugrunde, ein Verfahren zur Markierung binär codierter Datensätze, insbesondere von Bilddaten oder Audio-Signalen, durch Implementierung wenigstens einer Informationseinheit in einen Datensatz derart weiterzubilden, indem eindeutig zuordnenbare Informationseinheiten derart in den urheberrechtlich zu schützenden Datensatz inplementiert werden, so daß deren Zuordnenbarkeit durch Veränderungen am Datensatz nicht verloren geht. Das Identifikationsverfahren soll dem Urheber sowie den Abnehmern und Verbreitern von multimedialen Werken die Möglichkeit geben, die Urheberschaft und Eigentumschaft zu überprüfen sowie Nachweise für den Mißbrauch der multimedialen Werke zu liefern.

Die Lösung der der Erfindung zugrundeliegenden Aufgabe sind in den Ansprüchen 1 und 9 angegeben. Vorteilhafte Weiterbildungen des erfindungsgemäßen Verfahrens sind anschließenden Ansprüchen 2 ff. zu entnehmen.

Erfindungsgemäß ist ein Verfahren zur Markierung binär codierter Datensätze, insbesondere von Bilddaten oder Audio-Signalen, durch Implementierung wenigstens einer Informationseinheit in einen Datensatz derart ausgebildet, daß eine diskrete Positionsfolge zur Implementierung von Informationseinheiten in den zu markierenden Datensatz unter Berücksichtigung datensatzspezifischer Eigenschaften sowie unter Verwendung eines Schlüssels generiert wird und, daß die zu implementierende Informationseinheit an die durch die Positionsfolge festgelegten Positionen im Datensatz geschrieben bzw. gelesen wird.

Das erfindungsgemäße Verfahren ermöglicht zusätzliche Informationen geheim, versteckt und robust in multimedialen Daten, d.h. inbesondere digitalen Bildern zu integrieren. Das gleiche Verfahren läßt sich jedoch auch zu Kennzeichnung von Audio-Signalen anwenden, die Signale betreffen, die zeitlich und nicht nach Pixelwerten strukturiert sind.

Neben der Anwendung bei farbigen, graustufigen und binären Einzelbildern, ist das erfindungsgemäße Verfahren auch bei digitalen Videodaten, d.h. Bildfolgen, anwendbar. Die Einbettung der zusätzlichen Informationen führt zu keiner wahrnehmbaren Verschlechterung der Bildqualität. Die eingebetteten Informationen können bei Kenntnis eines möglicherweise geheimzuhaltenden Schlüssels rekonstruiert werden.

So wird erfindungsgemäß in einem ersten Verfahrensschritt eine pseudo-zufällige Positionsfolge generiert, welche zur Bestimmung der Position verwendet wird, an der ein Code oder allgemein eine Informationseinheit integriert werden soll. Dazu werden Charakteristika, welche beispielsweise aus den Bilddaten extrahiert werden, in Kombination mit einem geheimen Schlüssel als Startwert für die Positionsgenerierung verwendet. In einem zweiten Schritt wird die Informationseinheit, an die durch die "Positionsfolge spezifizierten Positionen geschrieben oder aus diesen ausgelesen. Es existieren hierfür unterschiedliche Methoden für das Schreiben bzw. Lesen der Informationseinheit, welche in Abhängigkeit vom Bildtyp verwendet werden.

Grundsätzlich sind drei zu unterscheidende Markierungstechniken in Abhängigkeit der zu markierenden Datensätze zu unterscheiden:

A) Die frequenzbasierte Markierung von Farbbildern und graustufigen Bildern.

Dieses Verfahren basiert auf der Kenntnis, daß typische digitale Bilder von Menschen, Gebäuden, natürlichen Umgebungen etc. als nicht stationäre statistische Prozesse angesehen werden können, die stark redundant und störungstolerant sind.

Die Einbettung der binär codierten Informationen erfolgt im Frequenzraum des Bildes. Die folgende Beschreibung geht von einer Darstellung des Bildes im Ortsraum aus, in die jedes Bild konvertiert werden kann. Das Bild wird zunächst in Blöcke von Pixeln zerlegt. Die Blöcke werden mittels einer Transformationsfunktion vom Ortsraum in den Frequenzraum transformiert. Hierzu sind beliebige Transformationsfunktionen zu verwenden. Eine bevorzugte Möglichkeit ist die Verwendung der sogenannten "Discrete Cosinus Transformation" (DCT). Weitere Transformationen sind ebenso sinnvoll anwendbar, wie beispielsweise die Wavelet-Transformation, die Fouriertransformation, die Hadamard-Walsh Transformationen oder die Z-Transformation. Gerade bei Wavelet-Transformationen sind größere Blockgrößen sinnvoll. Anschließend werden die Blöcke von Frequenzkomponenten bzw. die für die Einbettung relevanten Teile der Blöcke quantisiert. Zur Quantisierung werden vorzugsweise Quantisierungsmatrizen ähnlich wie die bei dem Quantisierungsschritt des JPEG-Kompressionsstandards verwendet. Bezüglich des vorgenannten Kompressionsstandards sei auf die Druckschrift von Wallace verwiesen, "The JPEG still picture compression standard", Communications of the ACM, Vol. 34, No. 4, April 1991, S. 30-40.

Mittels der im ersten Schritt des erfindungsgemäßen Verfahrens generierten Positionsfolgen werden die Blöcke sowie die genauen Positionen innerhalb der ausgewählten Blöcke bestimmt, an die die Informationen eingebettet werden. Die Einbettung eines Bits ("1" oder "0") in einen Block erfolgt, indem bestimmte Relationsmuster, d.h. Größenverhältnisse, zwischen bestimmten Elementen, den sogenannten Frequenzkoeffizienten des Blocks mit einer moderaten Varianzschwelle gehalten bzw. erzeugt werden.

Sinnvollerweise werden Elemente des mittleren Frequenzbereiches zu Einbettung herangezogen, da hochfrequente Anteile z.B. durch verlustbehaftete Kompression, ohne sichtbaren Qualitätsverlust leicht eliminiert werden können und Modifikationen in den niederfrequenten Anteilen zu sichtbaren Änderungen führen. Prinzipiell sind jedoch alle Frequenzkomponenten verwendbar.

Um die Implementierung der zur Markierung verwendeten Informationseinheiten möglichst unantastbar gegen ungewollten Zugriff und/oder gegen Datenverarbeitungsprozesse, die den Datensatz formatieren bzw. in geeignete Formen umordnen, zu machen, ist die sogenannte Robustheit der eingebetteten Informationen gegen unautorisierten Zugriff durch Einstellung zweier Parameter zu optimieren. Dies ist zum einen die sogenannte Distanz D zwischen ausgewählten, quantisierten Frequenzkomponenten, wobei eine größere Distanz eine stärkere Robustheit liefert, wodurch jedoch auch eine leichtere Sichtbarkeit der Modifikationen verbunden ist. Der zweite Parameter ist der sogenannte Quantisierungsfaktor Q, der benutzt wird, um die ausgesuchten Werte für den eingebetteten Informationscode zu quantisieren. Ein größerer Quantisierungsfaktor resultiert in einer kleineren Modifikation der Bilddaten, aber auch in schwächerer Robustheit gegenüber verlustbehafteter Kompressionen, wie sie beispielsweise von der JPEG-Kompression bekannt sind.

Um die Robustheit der Markierung gegen Attacken weiter zu erhöhen kann ein wiederholtes (redundantes) Markieren vorgenommen werden. Dazu werden die gleichen Informationen oder Informationseinheiten mehr als einmal in die ursprünglichen Daten integriert. Falls alle Blöcke eines Datensatzes ausgewählt und markiert worden sind, wird dadurch eine Art 'holographische' Markierung erzielt.

Bei der Aufteilung eines Datensatzes in Blöcke kann die Blockgröße variabel sein. Im Extremfall besteht der komplette Datensatz aus einem einzigen großen Block; im Falle des frequenzbasierten Verfahrens ist dann auch der gesamte Block bzw. Datensatz zu transformieren. Die Blockgröße kann andererseits bis 1 Pixel pro Block reduziert werden, wobei eine sinnvolle Blockgröße bei 2x2 Pixel liegt. Die verschiedenen Blöcke innerhalb eines Datensatzes können auch von unterschiedliche Größe sein.

Nach der Implementierung der Informationseinheiten kann das Bild durch eine Rückquantisierung und Rücktransformation wieder in eine Repräsentation im Ortsraum gebracht werden.

Das Verfahren erlaubt eine Vielzahl von Variationsmöglichkeiten, wie z.B. die beliebige Wahl der Transformation, der Blockbildung, der Auswahl der betrachteten Frequenzkomponenten, der Anzahl, Art und Zusammensetzung der Relationsmuster, der Auswahl und Zuordnung von Codierungen zu den Relationsmustern, sowie der Verteilung von Relationsmustern und damit der zugehörigen Codierung über verschiedene Blöcke.

B) Verhältnisbasierte Markierung von binären Bildern.

Der Wert jedes einzelnen Pixels in einem binären Bild entspricht entweder der "1" oder der "0". Dadurch ist im allgemeinen kein Freiraum für Rauschen bzw. Störungen vorhanden, der durch das Implementieren von zusätzlichen Informationen verwendet werden kann. Um Informationen, die zuvor binär codiert vorliegen, einbetten zu können, müssen passende Bereiche im Bild gefunden werden, bei denen sich durch die Markierung die Qualität des Originalbildes nicht verschlechtert. Diese Bildbereiche sind für jedes individuelle Bild bzw. zumindest für bestimmte Bildtypen unterschiedlich.

Das vorgeschlagene Verfahren für binäre Bilder basiert auf dem Verhältnis von "1"- und "0"-Bits in einem ausgewählten Block. So sei R(b) die Rate der schwarzen Pixel, beispielsweise der "1"-Bits, in einem ausgewählten Block b des Bildes:

$$R(b) = N_S / N.$$

$N_S$ bedeutet die Anzahl der schwarzen Pixel in dem Block b und N die Blockgröße, d.h. die Gesamtzahl der Pixel in dem Block b.

Die Einbettung eines Bits in einen Block b erfolgt nach folgender Verfahrensweise:

Ein "1"-Bit wird in einem Block b eingebettet, falls R(b) innerhalb eines vorgegebenen Bereiches $(T_{1,min}, T_{1,max})$ liegt. Ein "0"-Bit wird dann eingebettet, falls R(b) in einem anderen vorgegebenen Bereich $(T_{2,min}, T_{2,max})$ liegt. Die beiden angegebenen Bereiche liegen zwischen 0% und 100%. Zur Einbettung eines Bits wird der jeweils betrachtete Block, falls nötig, durch Änderung von "1"-Bits in "0"-Bits oder umgekehrt so oft modifiziert, bis R(b) in den entsprechenden Bereich hineinfällt. Falls zu viele Änderungen notwendig sind, wird der ausgewählte Block für "ungültig" erklärt und in irgendeinen "ungültigen" Bereich außerhalb der beiden angegebenen Bereiche modifiziert. Ferner wird ein sogenannter "Puffer" zwischen den angegebenen Bereichen und den ungültigen Bereichen eingeführt, der den Grad der Robustheit gegen die Anwendung von Bildverarbeitungsverfahren auf das markierte Bild repräsentiert. Der Puffer beschreibt somit die Zahl der Bits, die in einem Block durch Bildverarbeitungsverfahren geändert werden dürfen, ohne die eingebetteten Bits zu beschädigen. Z.B. bedeutet ein Puffer von 5%, daß das Umkippen von weniger als 4 Bits innerhalb eines 8x8 Bit-Blocks den eingebetteten Code nicht beschädigt. Eine vernünftige Wahl der Bereiche $T_1=(T_{1,min}, T_{1,max})$ und $T_2 =(T_{2,min}, T_{2,max})$ sowie des Puffers, z.B. $T_1=$ (55,60), $T_2$=40,45) sowie von einem Puffer = 5 für einen 8x8 Bit-Block, ermöglicht eine ausgeglichene Balance zwischen Robustheit gegen Bildverarbeitungsverfahren einerseits und Sichtbarkeit der eingebrachten Informationen andererseits.

Der Änderungsalgorithmus, nach dem die zu implementierenden Informationseinheiten an die entsprechenden durch die Positionsfolgen festgelegten Stellen der Datensätze eingebracht werden, ist nicht zuletzt von den Verteilungen der "1"- und "0"-Bits abhängig. Z.B. werden für sogenannte "dithered" binäre Bilder die Modifikationen gleichmäßig über den ganzen Block verteilt vorgenommen. Das Bit, das die meisten Nachbarn mit dem gleichen Wert hat, wird geändert.

Hingegen bei binären Bildern (Schwarz/Weiß) mit scharfen Kontrasten werden jedoch die Modifikationen an den Grenzen zwischen schwarzen und weißen Pixeln vorgenommen. Das Bit, das die meisten Nachbarn mit den umgedrehten Werten hat, wird geändert. In beiden Verfahren werden an den Grenzen eines Blocks die angrenzenden Bits der benachbarten Blöcke berücksichtigt.

Wie vorstehend beschrieben, wird als Kriterium zur Auswahl geeigneter Blöcke eine Schwelle eingeführt, die allgemein einen Grenzwert T aufweist. Falls die Änderungen an den ausgewählten Koeffizienten eines Blocks zur Integration eines Bits < T, dann ist der Block gültig; andernfalls ungültig. Es werden im folgenden verschiedene Methoden vorgeschlagen, die es ermöglichen, beim Extraktionsprozeß der Markierung festzustellen, ob es sich um einen gültigen oder ungültigen Block handelt:

- Eine Aussage über die Gültigkeit jedes Blockes wird zur Rekonstruktion der Markierung als zweiter Teil des Schlüssels abgespeichert. Eine Sequenz "110111..." sagt beispielsweise aus, daß der erste, zweite, vierte, fünfte und sechste Block gültig ist, wohingegen der dritte Block ungültig ist. Die Folge der Blöcke wird wie gehabt mittels des Schlüssels (1. Teil des Schlüssels) und charakteristischen Eigenschaften des Bildes bestimmt.

- Eine zweite Methode definiert einen Puffer zwischen den gültigen und ungültigen Blöcken. Falls eine Modifikation an den Koeffizienten zur Integration der Markierung größer als der Grenzwert T ist, aber kleiner als die Summe von Grenzwert und Puffer wäre, dann wird dieser Block in der Weise modifiziert, daß die Modifikation größer ist als die Summe aus Grenzwert und Puffer. Diese Technik wird bei beiden vorstehend beschriebenen Verfahren angewendet.

- Falls der Grenzwert T auf "0" gesetzt wird, sind keine Modifikationen an den originalen Daten zur Integration einer Markierung erlaubt. In diesem Fall handelt es sich um einen natürlichen Integrationsprozeß, d.h. es werden nur solche Blöcke zur Markierung herangezogen, die keine Änderungen im Verhältnis der Größen der Frequenzkoeffizienten erfordern. Die Information darüber, welche Blöcke/Positionen zur Markierung verwendet werden, werden wie oben beschrieben als zweiter Teil eines Schlüssels abgespeichert.

c) Verfahren zur Markierung von Bildfolgen

Die vorstehend vorgestellten Verfahren zum Markieren von Bildern beziehen sich vornehmlich auf Markierungsmethoden für Einzelbilder, jedoch können diese auch auf Bildfolgen wie beispielsweise Videos, angewendet werden. Bei Bildfolgen sind zusätzliche Attacken gegen vorhandene Markierungen möglich. So können einzelne Markierungen durch Löschen einzelner Bilder aus der Bildfolge entfernt werden. Bewegungsschätzende und bewegungskompensierende Kompressionstechniken wie beispielsweise im MPEG-Standard können ebenso zum Entfernen von Markierungen führen. So werden in einem dritten Verfahren zur Markierung von Bildfolgen die Markierungen wiederholt in die Einzelbilder bestimmter Sequenzen der Gesamtbildfolge eingebettet, wobei die Robustheit gegen bekannte Attacken dabei erhöht werden kann, indem die Länge der Sequenz jeweils zu implementierender Informationseinheiten skaliert wird. Im Extremfall werden die Informationen in sämtliche Einzelbilder des gesamten Videos integriert.

## Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1    Schreibvorgang für eine Markierung,

Fig. 2    Lesevorgang einer Markierung,

Fig. 3    Tabelle für "1"-, "0"-Bit und "ungültiges Muster,

Fig. 4    mögliche Positionen für die Einbettung einer Informationseinheit in einen 8x8 Block,

Fig. 5    Beispiel einer Einbettung einer Informationseinheit durch Transformation, Quantifizierung und Modifikation von Frequenzkomponenten,

Fig. 6    beispielhafte Modifikation zur Markierung bei gleichmäßig verteilten "1"- und "0"-Bits sowie

Fig. 7    beispielhafte Modifikation zur Markierung bei scharfen Trennlinien zwischen "1"- und "0"-Bits.

## Beschreibung von Ausführungsbeispielen

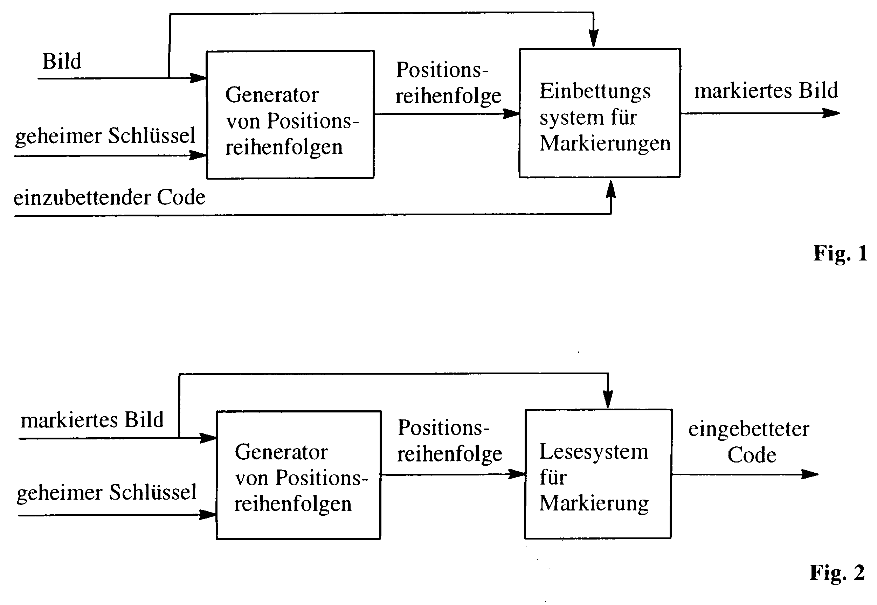

In Fig. 1 ist das erfindungsgemäße Ablaufschema zum Einbetten von binär codierten Informationseinheiten in einen Datensatz, der im vorliegenden Beispiel ein Bild ist, angegeben. Aus den Informationen des Bildes sowie unter Zugrundelegung eines geheimen Schlüssels wird eine Positionsreihenfolge generiert, nach der der einzubettende Code in das Bild implementiert wird. Als Ergebnis wird ein markiertes Bild erhalten, dessen Markierungen durch unautorisierten Zugriff Dritter oder durch Veränderung des Bildes bzw. des Datensatz nicht beeinträchtigt werden kann.

Für den Lesevorgang, der beispielsweise zum Nachverfolgen etwaiger unerlaubter Vervielfältigungen benützt wird, wird das markierte Bild unter Zugrundelegung des vorher verwendeten geheimen Schlüssels, der zur Implementierung der Informationseinheiten verwandt wurde, benutzt, um die Positionsreihenfolge zu generieren, mit der das Auslesen des eingebetteten Codes möglich ist (siehe Fig.2). Als Ergebnis erhält man den ursprünglich in den Datensatz eingebetteten Code.

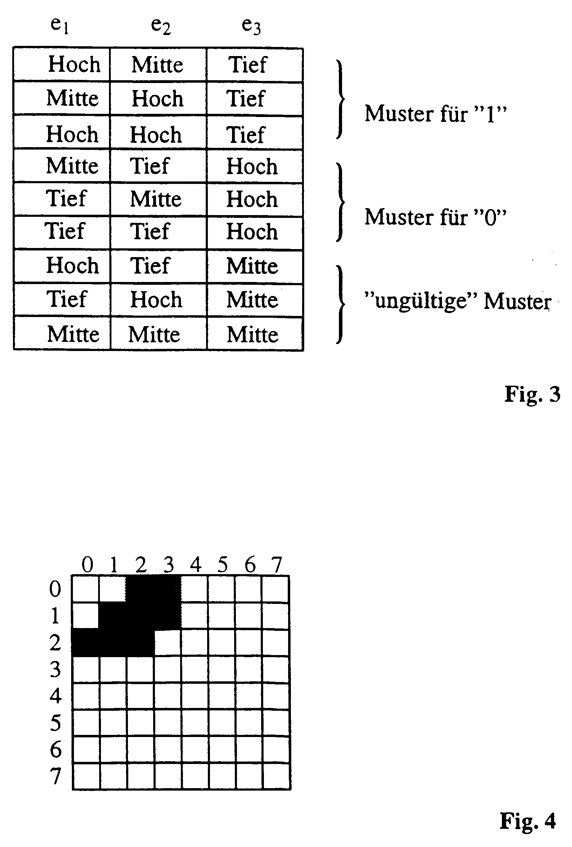

Anhand der Figuren 3 und 4 ist ein Beispiel für die frequenzbasierte Markierung von Farbbildern, insbesondere eines 8x8 Pixel-Blockes angegeben. Aus der in Fig. 3 dargestellten Tabelle sind drei unterschiedliche Gruppen von Relationsmustern zwischen Frequenzkoeffizienten dargestellt, nämlich Muster für "1", Muster für "0" sowie sogenannte "ungültige" Muster. Das "1"-Muster repräsentiert ein "1"-Bit bzw. das "0"-Muster repräsentiert ein "0"-Bit der eingebetteten, codierten Informationseinheit. Falls für den Vorgang der Implementation zu große Modifikationen am ursprünglichen Datensatz notwendig werden, um beispielsweise das erwünschte gültige Muster für ein Bit zu erhalten, dann ist dieser Block ungültig. In diesem Fall werden die Größenrelationen zwischen den Elementen zu einem beliebigen "ungültigen" Muster modifiziert, um ein eindeutiges Lesen der Information zu ermöglichen. Die in der oberen Tabelle dargestellten Relationsmuster stellen Abhängigkeiten von den Verhältnissen der Größen je dreier Elemente ($e_1$, $e_2$, $e_3$) eines 8x8 Blockes dar.

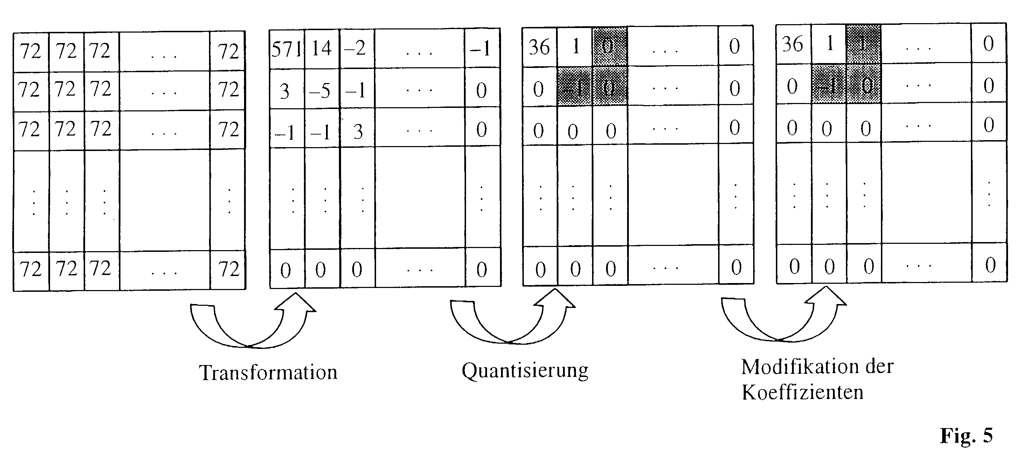

Aus Fig. 5 geht exemplarisch ein Einbettungsprozeß hervor, der sich aus dem Schritt der Transformation, der Quantisierung sowie der Modifikation der Koeffizienten zusammensetzt. In der in Fig. 4 dargestellten Abfolge wird ein Bit für ein ausgewähltes Muster in einem 8x8 Block implementiert.

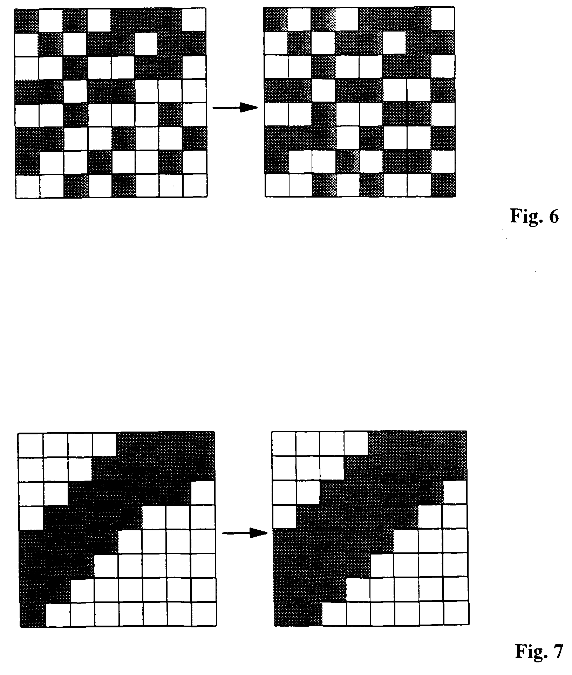

Aus den Fig. 6 und 7 gehen zwei Beispiele für die verhältnisbasierte Markierung zweier binären Bilder hervor. Fig. 6 stellt ein Beispiel für "dithered" binäre Bilder dar, bei denen die Modifikationen gleichmäßig über den ganzen Block verteilt sind. Die Implementierung erfolgt in diesem Fall derart, daß das Bit, das die meisten Nachbarn mit gleichem Wert hat, geändert wird.

Im Unterschied dazu geht aus Fig. 7 ein binäres Bild mit sehr scharfen Kontrasten hervor, bei dem die Implementierungen an den Grenzen zwischen schwarzen und weißen Pixeln vorgenommen wird. Das Bild, das die meisten Nachbarn mit den umgedrehten Werten aufweist, wird geändert.

In beiden dargestellten Fällen werden an den Grenzen eines Blockes die angrenzenden Bits der benachbarten Blöcke berücksichtigt.

Das vorstehend beschriebene erfindungsgemäße Verfahren ermöglicht es Informationen in multimedialen Werken, insbesondere Bilder und Bildsequenzen, geheim, versteckt und robust zu integrieren. Die in die originalen Daten eingebetteten Informationen (Kennungen, Markierung, Etikette) können dazu verwendet werden, den Halter des Urheberrechts auf das multimediale Werk, den Abnehmer bzw. Benutzer des Werkes oder auch das multimediale Werk an sich zu kennzeichnen bzw. zu identifizieren. Zwar wird mit dem erfindungsgemäßen Verfahren der eigentliche Mißbrauch nicht unmittelbar verhindert, doch sehr wahrscheinlich eingeschränkt, da die Markierung der Dokumente für die Geltendmachung der Urheberrechte beweisdienlich ist. Die robuste und versteckte Integration von Informationen kann jedoch auch für andere Zwecke benutzt werden, wie der Einbettung von privaten Informationen, beispielsweise Patientendaten, in die zugehörigen digitalen Bilder, beispielsweise Patientenbilder, wodurch auch stets eine verwechslungsfreie Zuordnung gewährleistet ist. Ferner können Markierungen in multimedialen Werken, wie z.B. Musik- und Filmsequenzen zur automatischen Bestimmung bzw. Messung der Benutzerzahl verwendet werden.

Die Anwendungsgebiete dieser Erfindung beinhalten alle elektronischen Informationsdienste, in denen der Schutz von unerlaubten Zugriff, Verteilung und Vervielfältigung von digitalen Daten sowie der Schutz von intelektuellen Besitzansprüchen erforderlich sind. Das vordringlichste Anwendungsgebiet ist als elektronische Publizieren von Zeitungen, Büchern, Bildern, Videos etc. auf einem portablen Medium, wie z.B. CDs, CD-Roms, Disketten, Bänder, sowie über Netzwerke, Satellit oder terestrische Übertragungsmedien. Die vorgestellten Verfahren sind ebenso einsetzbar in den Anwendungsfeldern der geographischen Informationssysteme, der Medizin, den elektronischen Verteilerdiensten wie Pay-TV, Video-On-Demand usw. sowie der genaueren Messung der Konsumentenzahl im Bereich des Rundfunk und Fernsehens.

**Patentansprüche**

1. Verfahren zur Markierung binär codierter Datensätze, insbesondere von Rohdaten oder Audio-Signaldaten, durch Einbettung wenigstens einer Informationseinheit in einen Datensatz, dadurch **gekennzeichnet,** daß der zu markierende Datensatz in wenigstens einen Block von Pixeln bzw. Zeitsignalen eingeteilt wird, der/die mittels einer Transformationsfunktion vom Ortsraum bzw. Zeitbereich in den Frequenzraum transformiert wird/werden, daß eine diskrete Positionsfolge zur Bestimmung der Position der Einbettung von Informationseinheiten in den zu markierenden Datensatz unter Verwendung von datensatzspezifischen Eigenschaften sowie eines Schlüssels generiert wird, und daß die einzubettende Informationseinheit an die durch die Positionsfolge festgelegten Positionen im transformierten Datensatz geschrieben bzw. von diesen Positionen gelesen wird.

2. Verfahren nach Anspruch 1,
dadurch **gekennzeichnet,** daß die datensatzspezifischen Eigenschaften inhaltliche Merkmale, Objektmerkmale oder geometrische oder formatspezifische Eigenschaften sind.

3. Verfahren nach Anspruch 1 oder 2,
dadurch **gekennzeichnet,** daß die Transformationsfunktion eine diskrete Cosinus Transformation, eine Wavelet-Transformation, eine Fouriertransformation, Hadamard-Walsh Transformationen oder eine Z-Transformation ist.

4. Verfahren nach einem der Ansprüche 1 bis 3,
dadurch **gekennzeichnet,** daß unter Verwendung von Quantisierungsmatrizen die in den Frequenzraum transformierten Blöcke quantisiert werden.

5. Verfahren nach Anspruch 4,
dadurch **gekennzeichnet,** daß die Quantisierungsmatrizen dem Quantisierungsschritt des JPEG-Kompressionsstandards entsprechen.

6. Verfahren nach einem der Ansprüche 1 bis 5,
dadurch **gekennzeichnet,** daß unter Zugrundelegung der generierten Positionsfolge die zu implementierenden Informationseinheiten in die Blöcke eingebettet werden.

7. Verfahren nach einem der Ansprüche 1 bis 6,
dadurch **gekennzeichnet,** daß die Einbettung der zu implementierenden Informationseinheiten an den ausgewählten Positionen bzw. Blöcken durch Änderung bzw. Beibehaltung der Größenverhältnisse von ausgewählten Frequenzkoeffizienten, insbesondere des mittleren Frequenzbereichs, erfolgt.

8. Verfahren nach Anspruch 4,
dadurch **gekennzeichnet,** daß nach Einbettung der Informationseinheit eine Rückquantisierung und Rücktransformation des Datensatzes in den Ortsraum erfolgt.

9. Verfahren zur Markierung binär codierter Datensätze, insbesondere von Rohdaten, durch Einbettung wenigstens einer Informationseinheit in einen Datensatz,
dadurch **gekennzeichnet,** daß der binär codierte Datensatz in Blöcke mit N Pixel aufgeteilt wird, wobei die Einbettung der zu implementierender Informationseinheiten unter Verwendung von datensatzspezifischen Eigenschaften sowie eines Schlüssels an den ausgewählten Positionen der Blöcke durch Änderung bzw. Beibehaltung des Zahlenverhältnisses von "1"-und "0"-Bits in den jeweiligen Blöcken erfolgt.

10. Verfahren nach Anspruch 9,
dadurch **gekennzeichnet,** daß die Einbettung einer Informationseinheit, die einem 1-Bit entspricht, in einem Block b nach folgender Bedingung erfolgt:

$$T1,min < R(b) < T1,max$$

mit

R(b) = N1 / N
N1 = Anzahl der 1-Bit-Pixel im Block b
T1,min, T1,max oberer und unterer Grenzwerte.

11. Verfahren nach Anspruch 9,
dadurch **gekennzeichnet,** daß die Einbettung einer Informationseinheit, die einem 0-Bit entspricht, in einem Block b nach folgender Bedingung erfolgt:

$$T2,min < R(b) < T2,max$$

mit

R(b) = N1 / N
T2,min, T2,max oberer und unterer Grenzwerte.

12. Verfahren nach Anspruch 10 oder 11,
dadurch **gekennzeichnet,** daß für ein 8x8 Bit-Block folgende Werte gelten:

T1,min = 55
T1,max = 60
T2,min = 40
T2,max = 45.

13. Verfahren nach Anspruch 9,
dadurch **gekennzeichnet,** daß bei Blöcken mit relativ gleichmäßig verteilten Bit-Werten, an den Stellen Bit-Implementierungen vorgenommen werden, deren Nachbarstellen einen hohen Anteil von Bits mit gleichen Wert haben.

14. Verfahren nach Anspruch 9,
dadurch **gekennzeichnet,** daß bei Blöcken, die Bereiche einheitlicher Bit-Stellung aufweisen, an Stellen Bit-Implementierungen vorgenommen werden, an denen Felder unterschiedlicher Bit-Stellungen aneinandergrenzen, so daß das Bit mit den meisten Nachbarn mit den umgekehrten Werten geändert wird.

15. Verfahren nach einem der Ansprüche 9 bis 14, dadurch gekennzeichnet, daß für den Fall, daß zu starke Änderungen zur Einbettung von Informationen an den ausgewählten Positionen notwendig sind, der entsprechende Block als ungültig markiert wird, wobei ungültige Bereiche außerhalb der Bereiche T1=(T1,min,T1,max), T2=(T2,min,T2,max) liegen.

16. Verfahren nach Anspruch 15, dadurch **gekennzeichnet,** daß ein zusätzlicher Toleranzpuffer zwischen T1, T2 und ungültigen Bereichen eingeführt wird.

**Claims**

1. Method of marking data sets in binary coding, particularly raw data or audio signal data, by embedding at least one unit of information into a data set, **characterised** in that the data set to be marked is subdivided into at least one block of pixels or time signals, which block(s) is/are transformed by means of a function of transformation from the topical or time range into the frequency range, that a discrete sequence of positions is generated for the determination of the embedding position of units of information in the data set to be marked, using data set-specific characteristics and a code, and that said unit of information to be embedded is written into or read out from these positions at the positions in the transformed data set, which are determined by the sequence of positions.

2. Method according to Claim 1, **characterised** in that said data set-specific characteristics are characteristics of contents, object characteristics or geometric or format-specific characteristics.

3. Method according to Claim 1 or 2, **characterised** in that said transformation function is a discrete cosine transformation, a wavelet transformation, a Fourier transform, a Hadamard-Walsh transformation or a Z-transformation.

4. Method according to any of the Claims 1 to 3, **characterised** in that quantisation matrices are used for quantising the blocks transformed into the frequency range.

5. Method according to Claim 4, **characterised** in that said quantising matrices correspond to the quantisation step in the JPEG compression standard.

6. Method according to any of the Claims 1 to 5, **characterised** in that said units of information to be implemented are embedded into said blocks on the basis of said generated sequence of positions.

7. Method according to any of the Claims 1 to 6, **characterised** in that the embedding of said units of information to be implemented is performed at said selected positions or blocks, respectively, by modifying or maintaining the size ratios of selected frequency coefficients, particularly in the intermediate frequency range.

8. Method according to Claim 4, **characterised** in that after embedding of said unit of information a re-quantisation and re-transformation of the data set into the topical range is performed.

9. Method of marking data sets in a binary coding, particularly of raw data, by embedding at least one unit of information into a data set, **characterised** in that said data set in binary coding is subdivided into blocks including N pixels, with the embedding of the units of information to be embedded being performed with use of data set-specific characteristics as well as a code at the selected positions of said blocks, by modifying or maintaining the numerical ratio of "1"-bits and "0"-bits in the respective blocks.

10. Method according to Claim 9, **characterised** in that the embedding of a unit of information which corresponds to a 1-bit in a block b is performed in correspondence with the following condition:

$$T1,min < R(b) < T1,max$$

wherein

R(b) = N1 / N
N1 = number of the 1-bit pixel in block b
T1,min, T1,max = upper and lower limits.

11. Method according to Claim 9, **characterised** in that the embedding of a bit of information corresponding to a 0-bit in a block b is performed in correspondence with the following condition:

$$T2,min < R(b) < T2,max$$

wherein

R(b) = N1 / N

T2,min, T2,max = upper and lower limits.

**12.** Method according to Claim 10 or 11, **characterised** in that for one 8 x 8 bit block the following values apply:

T1,min = 55
T1,max = 60
T2,min =40
T2,max = 45.

**13.** Method according to Claim 9, **characterised** in that in blocks having comparatively homogeneously distributed bit values bit implementation is performed at those locations which have neighbouring locations presenting a high fraction of bits having the same value.

**14.** Method according to Claim 9, **characterised** in that in blocks presenting areas of homogeneous bit settings bit implementation is performed at those locations where fields of different bit settings are joining each other so that the bit having the most neighbours with the inverted values is modified.

**15.** Method according to any of the Claims 9 to 14, **characterised** in that in the event that the embedding of information at the selected positions requires excessive modifications the corresponding block is marked as invalid, with the invalid areas being beyond the ranges T1=(T1,min, T1,max), T2 = (T2,min, T2,max).

**16.** Method according to Claim 15, **characterised** in that an additional tolerance buffer is introduced between T1, T2 and said invalid areas.

## Revendications

**1.** Procédé de marquage des articles de données en code binaire, en particulier des données non traitées ou des données de signal audio, par incorporation d'au moins un élément d'information dans un article de données, **caractérisé** en ce que l'article de données à marquer est divisé en au moins un bloc d'éléments d'image ou de signaux de temps, le(s)quel(s) bloc(s) est/sont transformé(s) moyennant une fonction de transformation d'un niveau topique à un niveau de fréquences, en ce qu'une suite discrète suite de positions est engendrée pour le détermination de l'incorporation de la position des éléments d'information dans l'article de données à marquer, en utilisant des caractéristiques spécifiques des données et un code, et en ce que ledit élément d'information à incorporer est écrit dans ou lu de ces positions aux lieux dans l'article de données ainsi transformé, qui sont déterminés par ladite suite de positions.

**2.** Procédé selon la revendication 1, **caractérisé** en ce que les caractéristique spécifiques de l'article de données sont des caractéristiques de contenu, de l'objet ou des caractéristiques géométriques ou spécifiques du format.

**3.** Procédé selon la revendication 1 ou 2, **caractérisé** en ce que ladite fonction de transformation est une transformation discrète de cosinus, une transformation dite "wavelet", une transformation de Fourier, une transformation selon Hadamard-Walsh ou une transformation Z.

**4.** Procédé selon une quelconque des revendications 1 à 3, **caractérisé** en ce que des matrices de quantification sont utilisées pour la quantification des blocs transformés au niveau de fréquences.

**5.** Procédé selon la revendication 4, **caractérisé** en ce que lesdites matrices de quantification correspondent à l'étape de quantification selon le standard de compression JPEG.

**6.** Procédé selon une quelconque des revendications 1 à 5, **caractérisé** en ce que lesdits éléments d'information à implémenter sont incorporés dans lesdits blocs à la base de ladite suite de positions engendrée.

**7.** Procédé selon une quelconque des revendications 1 à 6, **caractérisé** en ce que l'incorporation desdits éléments d'information à implémenter est réalisée auxdites positions choisies ou respectivement aux bloc, en modifiant ou conservant les rapports de grandeur des coefficients de fréquence choisis, en particulier au niveau intermédiaire de fréquences.

**8.** Procédé selon la revendication 4, **caractérisé** en ce qu'après l'incorporation dudit élément d'information on réalise une re-quantification et re-transformation de l'article de données au niveau topique.

**9.** Procédé de marquage des articles de données en code binaire, en particulier des données non traitées, par incorporation d'au moins un élément d'information dans un article de données, **caractérisé** en ce que ledit article de données en code binaire est divisé en blocs qui comprennent N éléments d'image, en réalisation l'incorporation des éléments d'information à incorporer par utilisation des caractéristiques spécifiques de l'article de données et également d'un code aux positions choisies desdits blocs, en modifiant ou conservant le rapport numérique de "1" bits et "0" bits dans les blocs respectifs.

10. Procédé selon la revendication 9, **caractérisé** en ce que l'incorporation d'un élément d'information, qui correspond à 1 bit dans un bloc b se fait en observant la condition suivante:

$$T1,min < R(b) < T1,max$$

dans laquelle

R(b) = N1 / N
N1 = nombre des éléments d'image à 1 bit dans le bloc b
T1,min, T1,max = seuils supérieur et inférieur.

11. Procédé selon la revendication 9, **caractérisé** en ce que l'incorporation d'un bit d'information, qui correspond à un "0" bit, se fait en observant la condition suivante:

$$T2,min < R(b) < T2,max$$

dans laquelle

R(b) = N1 / N
T2,min, T2,max = seuils supérieur et inférieur.

12. Procédé selon la revendication 10 ou 11, **caractérisé** en ce que pour un bloc à 8 x 8 bits les valeurs suivantes s'appliquent:

T1,min = 55
T1,max = 60
T2,min =40
T2,max = 45.

13. Procédé selon la revendication 9, **caractérisé** en ce que dans des blocs aux valeurs de bits distribuées de façon relativement homogène, l'implémentation se fait aux positions qui ont des positions voisines à une haute fraction de bits à la même valeur.

14. Procédé selon la revendication 9, **caractérisé** en ce que dans des blocs, qui présentent des aires à position homogène de bits, l'implémentation se fait aux positions où des champs aux positions de bits différentes sont contigus l'un à l'autre, de façon que le bit ayant le plus grand nombre de voisins aux valeurs inverties soit modifié.

15. Procédé selon une quelconque des revendications 9 à 14, **caractérisé** en ce qu'au cas où l'incorporation des informations aux positions choisies requiert des modifications trop grandes, le bloc correspondant est marqué comme non valable, aux aires non valables étant à l'extérieur des gammes T1=(T1,min, T1,max), T2 = (T2,min, T2,max).

16. Procédé selon la revendication 15, **caractérisé** en ce qu'un tampon de tolérance supplémentaire est introduit entre T1, T2 et lesdites aires non valable.

Bild

geheimer Schlüssel

einzubettender Code

Generator
von Positionsreihenfolgen

Positionsreihenfolge

Einbettungs
system für
Markierungen

markiertes Bild

Fig. 1

markiertes Bild

geheimer Schlüssel

Generator
von Positionsreihenfolgen

Positionsreihenfolge

Lesesystem
für
Markierung

eingebetteter
Code

Fig. 2

EP 0 879 535 B1

| $e_1$ | $e_2$ | $e_3$ | |
|-------|-------|-------|---|
| Hoch | Mitte | Tief | |
| Mitte | Hoch | Tief | } Muster für "1" |
| Hoch | Hoch | Tief | |
| Mitte | Tief | Hoch | |
| Tief | Mitte | Hoch | } Muster für "0" |
| Tief | Tief | Hoch | |
| Hoch | Tief | Mitte | |
| Tief | Hoch | Mitte | } "ungültige" Muster |
| Mitte | Mitte | Mitte | |

**Fig. 3**

**Fig. 4**

| 72 | 72 | 72 | . . . | 72 |
|----|----|----|-------|----|
| 72 | 72 | 72 | . . . | 72 |
| 72 | 72 | 72 | . . . | 72 |
| : | : | : | | : |
| 72 | 72 | 72 | . . . | 72 |

| 571 | 14 | −2 | . . . | −1 |
|-----|----|----|-------|----|
| 3 | −5 | −1 | . . . | 0 |
| −1 | −1 | 3 | . . . | 0 |
| : | : | : | | : |
| 0 | 0 | 0 | . . . | 0 |

| 36 | 1 | 0 | . . . | 0 |
|----|---|---|-------|---|
| 0 | −1 | 0 | . . . | 0 |
| 0 | 0 | 0 | . . . | 0 |
| : | : | : | | : |
| 0 | 0 | 0 | . . . | 0 |

| 36 | 1 | 1 | . . . | 0 |
|----|---|---|-------|---|
| 0 | −1 | 0 | . . . | 0 |
| 0 | 0 | 0 | . . . | 0 |
| : | : | : | | : |
| 0 | 0 | 0 | . . . | 0 |

Transformation

Quantisierung

Modifikation der
Koeffizienten

Fig. 5

Fig. 6

Fig. 7